# EUROPEAN PATENT APPLICATION

(11) **EP 4 645 920 A1**
(43) Date of publication of application: **05.11.2025**
(21) Application number: 23909479.0
(22) Date of filing: 16.10.2023
(51) Int. Cl.: H04W 4/90

(54) **EMERGENCY CALL STATE CONTROL METHOD AND APPARATUS, ELECTRONIC DEVICE, AND STORAGE MEDIUM**

(30) Priority: 27.12.2022 CN 202211688528
(71) Applicant: Rolling Wireless S.À R.L., 2540 Luxembourg (LU)
(72) Inventor: HUANG, Zhiqiang, Shenzhen, Guangdong 518055 (CN)
(74) Representative: Cabinet Netter
(86) International application number: PCT/CN2023/124684
(87) International publication number: WO 2024/139545

(57) **Abstract**

Disclosed are a method and an apparatus for controlling an emergency call state, an electronic device, and a storage medium. The method includes: determining that an in-vehicle system enters a power-on initialization state after the in-vehicle system is started, the power-on initialization state being configured for initialization of the in-vehicle system; determining that the in-vehicle system enters a call deactivation state after the initialization of the in-vehicle system is completed, the call deactivation state being configured for processing an emergency call origination message; and controlling the in-vehicle system to enter a call origination state based on the emergency call origination message sent by the in-vehicle system, in which the in-vehicle system establishes a call connection with a public safety answering point in the call origination state.

## Description

### CROSS-REFERENCE TO RELATED APPLICATIONS

The present disclosure claims all the benefits of the Chinese patent application No. 202211688528.3, filed on December 27, 2022 before the China National Intellectual Property Administration of the People's Republic of China, entitled "Method and Apparatus for Controlling Emergency Call State, Electronic Device, and Storage Medium", which is explicitly incorporated herein by reference in its entirety.

### FIELD

The present disclosure generally relates to the technical field of vehicle emergency call, more specifically to a method and an apparatus for controlling an emergency call state, an electronic device, and a storage medium.

### BACKGROUND

Starting from the 1990s, automobiles and communication have come together, and automobiles were successively equipped with 2G, 3G, and 4G based mobile communication devices. With these devices, services such as navigation and information forecast based on communication capabilities are gradually realized. After a 2G cellular communication capability is available, significant development in intelligent transportation for addressing traffic safety is an in-vehicle emergency call system (emergency Call, abbreviated as eCall, also often called "emergency rescue").

The core idea of eCall is to use an in-vehicle satellite positioning system to obtain position information of a vehicle. After an accident occurs, an automatic alarm is triggered by sensor detection, or a user manually initiates an emergency call to give an alarm. While a voice call is being established, information such as a vehicle position, a driving direction, a vehicle license plate and a vehicle model, and the number of occupants is automatically sent as a minimum set of data (eCall minimum set of data, abbreviated as MSD) to a rescue platform of a rescue center, i.e., a public safety answering point (abbreviated as PSAP), enabling the rescue center to quickly position the accident vehicle and organize rescue.

Main network elements of an eCall system include: a cellular network supporting a circuit domain voice service; an IVS (in-vehicle system, also referred to as an in-vehicle station) supporting an eCall function; and a PSAP supporting the eCall function. Network element devices complete eCall related service functions through message interaction, such as a START message, an MSD message, an LLACK message, and an ALACK message, and there are related timers to ensure processing of the flow, such as T2 and T9. For details, reference can be made to the existing European Union eCall system technical specification (EN 16062).

The existing European Union eCall system technical specification (EN 16062) specifies related interaction messages and flows of the IVS with the cellular network and the PSAP, but does not design state control for a related IVS system. Unclear overall eCall state control leads to state control problems during product implementation, posing a potential risk to the overall eCall function.

### SUMMARY

In a first aspect, the present disclosure provides a method for controlling an emergency call state, including:
determining that an in-vehicle system enters a power-on initialization state after the in-vehicle system is started, the power-on initialization state being configured for initialization of the in-vehicle system;
determining that the in-vehicle system enters a call deactivation state after the initialization of the in-vehicle system is completed, the call deactivation state being configured for processing an emergency call origination message; and
controlling the in-vehicle system to enter a call origination state based on the emergency call origination message sent by the in-vehicle system, in which the in-vehicle system establishes a call connection with a public safety answering point in the call origination state.

In some embodiments, after controlling the in-vehicle system to enter a call origination state, the method further includes:
obtaining a first indication message representing call connection failure or determining call connection timeout, and entering a waiting for callback state configured for processing a callback from the public safety answering point; or
obtaining a second indication message representing call connection success or obtaining an initiation message, and entering a sending state configured for sending a minimum set of data which includes emergency rescue information of a vehicle.

In some embodiments, after obtaining a first indication message representing call connection failure or determining call connection timeout and entering a waiting for callback state, the method further includes:
obtaining redialing information, and initiating redialing according to the redialing information to enter the call origination state; or
obtaining callback information from the public safety answering point, and entering an in-call state according to the callback information; the in-call state being configured for processing a voice call between the in-vehicle system and the public safety answering point and a retransmission request for the minimum set of data; or
determining that a ninth preset duration has timed out, and entering the call deactivation state; if the ninth preset duration has not timed out, the in-vehicle system maintains a registered state at the public safety answering point and can automatically answer a call initiated by the public safety answering point.

In some embodiments, after obtaining a second indication message representing call connection success or obtaining an initiation message, and entering a sending state, the method further includes:
determining that a first preset duration has timed out, and entering an in-call state configured for processing a voice call between the in-vehicle system and the public safety answering point and a retransmission request for the minimum set of data; or
determining abnormal call interruption or timeout of a second preset duration, and entering the waiting for callback state, in which the timeout of a second preset duration represents clearing call when no clear instruction is received or the received clear instruction is incorrect; or
determining that an acknowledging receipt message from the public safety answering point based on the minimum set of data is received, and entering a waiting for acknowledgement state.

In some embodiments, after entering an in-call state, the method further includes:
obtaining a start message sent by the public safety answering point, and entering the sending state, in which the start message is configured for requesting the in-vehicle system to obtain the minimum set of data of the vehicle; or
obtaining normal call release or abnormal call interruption or timeout of the second preset duration, and entering the waiting for callback state.

In some embodiments, after entering a waiting for acknowledgement state, the method further includes:
determining that an acknowledging correct receipt message from the public safety answering point based on the minimum set of data is received and the acknowledging correct receipt message carries the clear instruction, or determining that the second preset duration has timed out, and entering the waiting for callback state, the clear instruction indicating entering the waiting for callback state; or
determining that an acknowledging correct receipt message from the public safety answering point based on the minimum set of data is received and the acknowledging correct receipt message carries a first identifier, or determining that a sixth preset duration has timed out and entering the in-call state, in which the first identifier indicates entering the in-call state, and the sixth preset duration timeout represents transmission failure of the minimum set of data.

In some embodiments, the method further includes:
when the in-vehicle system actively hangs up a call, controlling a state of the in-vehicle system to be transitioned to the call deactivation state.

In a second aspect, the present disclosure provides an apparatus for controlling an emergency call state, including:
a first determining module configured to determine that an in-vehicle system enters a power-on initialization state after the in-vehicle system is started, the power-on initialization state being configured for initialization of the in-vehicle system;
a second determining module configured to determine that the in-vehicle system enters a call deactivation state after the initialization of the in-vehicle system is completed, the call deactivation state being configured for processing an emergency call origination message; and
a control module configured to control the in-vehicle system to enter a call origination state based on the emergency call origination message sent by the in-vehicle system, in which the in-vehicle system establishes a call connection with a public safety answering point in the call origination state.

In a third aspect, the present disclosure provides an electronic device including: a processor, a memory, and a communication bus, in which the processor and the memory complete communication with each other through the communication bus;
the memory is configured to store a computer program; and
the processor is configured to execute the program stored in the memory to implement the method for controlling an emergency call state according to the present disclosure.

In a fourth aspect, the present disclosure provides a computer-readable storage medium storing a computer program, and when executed by a processor, the computer program implements the method for controlling an emergency call state according to the present disclosure.

In some embodiments, the method provided by the present disclosure can perform clear and explicit control and processing of the state of the in-vehicle system, so that an in-vehicle emergency call system can quickly and efficiently complete related services, and improve robustness, thereby ensuring that emergency rescue can be timely responded to and processed.

### BRIEF DESCRIPTION OF THE DRAWINGS

The accompanying drawings herein are incorporated into and constitute a part of the present specification, illustrate embodiments in accordance with the present disclosure, and are used to explain the principles of the present disclosure together with the specification.

In order to more clearly explain the technical solutions of the embodiments of the present disclosure, the accompanying drawings that are required to be used in the embodiments are briefly described below. Obviously, it should be understood that for those of ordinary skill in the art, other drawings can be obtained according to these drawings without inventive work.
FIG. 1 is a system architecture diagram of an emergency call state control method provided by an embodiment of the present disclosure;
FIG. 2 is a flow diagram of an emergency call state control method provided by an embodiment of the present disclosure;
FIG. 3 is a flow diagram of an emergency call state control method provided by an embodiment of the present disclosure;
FIG. 4 is a structural diagram of an emergency call state control apparatus provided by an embodiment of the present disclosure; and
FIG. 5 is a structural diagram of an electronic device provided by an embodiment of the present disclosure.

### DETAILED DESCRIPTION

In order to make objects, technical solutions, and advantages of embodiments of the disclosure clearer, the technical solutions in the embodiments of the disclosure will be clearly and fully described in combination with the accompanying drawings in the embodiments of the present disclosure. Obviously, the embodiments to be described are part of embodiments but not all embodiments of the disclosure. Based on the embodiments of the disclosure, all other embodiments obtained by those of ordinary skill in the art without inventive work shall fall within the scope of the disclosure.

A method provided in an embodiment of the present disclosure can be applied to an electronic device which may be a module capable of implementing a communication function, a terminal device including the module, or the like, and the terminal device may be a mobile terminal or an intelligent terminal. In some embodiments, the mobile terminal may be at least one of a mobile phone, a tablet computer, a laptop computer, and the like. In some embodiments, the intelligent terminal may be a terminal including a wireless communication module, such as an intelligent vehicle, a smart watch, a shared bicycle, or an intelligent cabinet. In some embodiments, the module may be a wireless communication module, such as any one of a 2G communication module, a 3G communication module, a 4G communication module, and a 5G communication module.

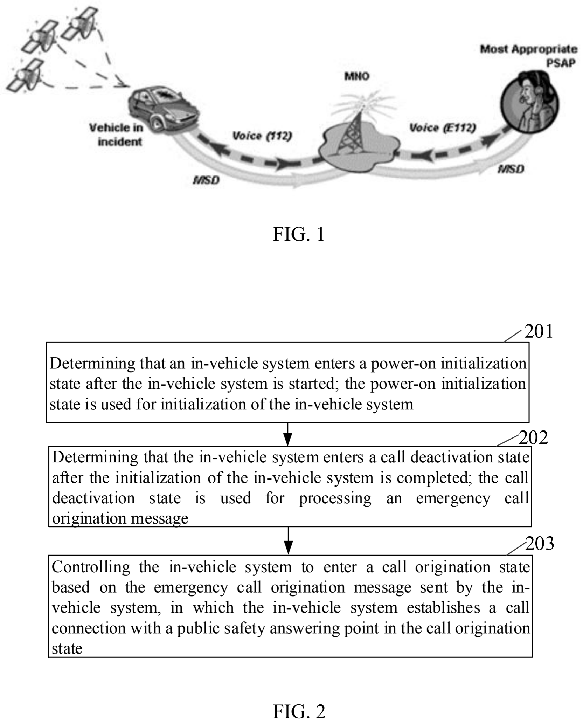

A method provided in an embodiment of the present disclosure may also be applied to a system architecture as shown in FIG. 1. In the system architecture, main network elements of an eCall system include: a cellular network supporting a circuit domain voice service; an IVS supporting an eCall function; and a PSAP supporting an eCall function.

Based on the system architecture or the electronic device, the emergency call state control method is described in detail. Referring to FIG. 2, an emergency call state control method includes:
Step 201: determining that an in-vehicle system enters a power-on initialization state after the in-vehicle system is started; the power-on initialization state is used for initialization of the in-vehicle system;
Step 202: determining that the in-vehicle system enters a call deactivation state after the initialization of the in-vehicle system is completed; the call deactivation state is used for processing an emergency call origination message; and
Step 203: controlling the in-vehicle system to enter a call origination state based on the emergency call origination message sent by the in-vehicle system, in which the in-vehicle system establishes a call connection with a public safety answering point in the call origination state.

In some embodiments, the method can perform clear and explicit control and processing of the state of the in-vehicle system, so that an in-vehicle emergency call system can quickly and efficiently complete related services, and improve robustness, thereby ensuring that emergency rescue can be timely responded to and processed.

States of the in-vehicle system at least include the following:
a power-on initialization state (ECALL_NULL) mainly for powering on and initialization related processing;
a call deactivation state (ECALL_INACTIVE) mainly for call origination message processing;
a call origination state (ECALL_ORIG_CALL) mainly for calling communication connection process message and related timer processing;
a sending state (ECALL_TRANSMIT), i.e., an MSD sending state, mainly for sending of an MSD message and related timer processing;
a waiting for acknowledgement state (ECALL_WAITFORACK), i.e., waiting for an MSD acknowledgement state, mainly for an acknowledgement message ALACK of the MSD and related timer processing;
an in-call state (ECALL_INCALL), mainly for voice call processing and an MSD retransmission request; and
a waiting for callback state (ECALL_ALLOW_MT), mainly for PSAP callback processing, redialing processing, and the like.

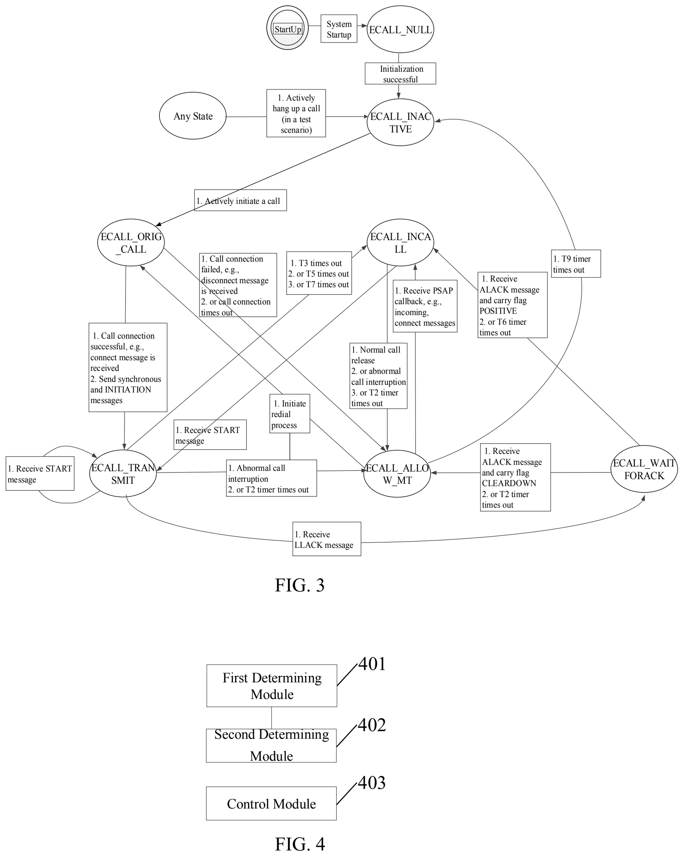

In some embodiments, as shown in FIG. 3, after controlling the in-vehicle system to enter the call origination state, entering different states can be triggered according to different messages or events, at least including the following two cases.

A first case: obtaining a first indication message representing call connection failure or determining call connection timeout, and entering the waiting for callback state; the waiting for callback state being used for processing a callback from the public safety answering point.

Two results may occur when the IVS calls the PSAP: call connection success and call connection failure. Regardless of which result occurs, the IVS will receive an indication message. For example, receiving a disconnect message indicates call connection failure, and receiving a connect message indicates call connection success.

A duration of call connection can be preset. If the connection is still not successful after the duration is exceeded, call connection timeout is determined. Specifically, the duration can be set by a timer. When the first indication message is a disconnect message, or when the call connection timeout is determined, the waiting for callback state is entered.

A second case: obtaining a second indication message representing call connection success or obtaining an initiation message, and entering a sending state; the sending state being used for sending a minimum set of data; the minimum set of data including emergency rescue information of a vehicle, for example, the minimum set of data may include position information, time, the number of passengers, a license plate number, and other information required for emergency rescue of the vehicle, without limitation.

When the second indication message is a connect message, or the IVS obtains an initiation message, the sending state is entered. The initiation message may also be referred to as an initiation signal or an INITIATION message, and an IVS eCall modem usually sends an initiation signal to the PSAP.

In some embodiments, after entering the waiting for callback state, other different states can be transitioned to according to different obtained information, at least including the following three cases.

A first case: obtaining redialing information, and initiating redialing according to the redialing information, to enter the call origination state.

When redialing information is obtained in the waiting for callback state, it indicates that the IVS has re-initiated a redial process, and then the call origination state is entered to perform redialing.

A second case: obtaining callback information from the public safety answering point; and entering an in-call state according to the callback information; the in-call state being used for processing a voice call between the in-vehicle system and the public safety answering point and a retransmission request for the minimum set of data.

When a callback message from the PSAP is received, for example, an incoming message or a connect message is received, it indicates that a normal call is established between the IVS and the PSAP, and the in-call state is entered. In the in-call state, a voice call and the MSD retransmission request can be performed to retransmit an MSD not normally sent.

A third case: determining that a ninth preset duration has timed out, and entering the call deactivation state; if the ninth preset duration has not timed out, the in-vehicle system maintains a registered state at the public safety answering point and can automatically answer a call initiated by the public safety answering point.

The ninth preset duration can be controlled by a T9 timer (ninth timer). The T9 timer is used for the in-vehicle terminal to maintain a registered state on a service network after rescue equipment clears a call, and to be able to answer a call from the rescue equipment. Before the T9 timer times out, first paging received by the in-vehicle terminal will be regarded by the in-vehicle terminal as paging for an eCall callback, and a connection will be automatically established according to an eCall callback procedure.

In some embodiments, after entering the sending state, other different states can be transitioned to according to different obtained information, at least including the following three cases:
A first case: determining that a first preset duration has timed out, and entering an in-call state; the in-call state being used for processing a voice call between the in-vehicle system and the public safety answering point and a retransmission request for the minimum set of data.

Here, the first preset duration can include multiple durations which can be controlled by a T3 timer, a T5 timer, and a T7 timer, respectively. After the T3 timer times out, the IVS should stop sending an INITIATION signal, and a duration is generally set to 2s. After the T5 timer times out, the IVS should reconnect an IVS audio system and terminate an eCall specific behavior (i.e., should not continue sending MSD data), and a duration is generally set to 5s. After the T7 timer times out, the IVS should mark transmission of the MSD as unsuccessful, reconnect the IVS audio system and terminate the eCall specific behavior, and a duration is generally set to 20s.

A second case: determining abnormal call interruption or timeout of a second preset duration, and entering the waiting for callback state.

Here, the second preset duration can be controlled by a T2 timer. After the T2 timer times out, the IVS should cancel a call, and a duration is generally set to 1 hour. After determining that a call is abnormally interrupted or the T2 timer times out, the waiting for callback state is entered to wait for the PSAP to initiate an active call, i.e., to wait for callback information from the PSAP.

A third case: determining that an acknowledging receipt message from the public safety answering point based on the minimum set of data is received, and entering the waiting for acknowledgement state.

After acknowledging receipt of the MSD, the PSAP will send the acknowledging receipt message (LLACK) to the IVS, indicating that the MSD sent by the IVS has been received.

In some embodiments, after entering the in-call state, other different states can be transitioned to according to different obtained information, at least including the following two cases.

A first case: obtaining a start message sent by the public safety answering point, and entering the sending state; the start message being used for requesting the in-vehicle system to obtain the minimum set of data of the vehicle.

The PSAP sends a start message (a START message, also referred to as a SEND-MSD message) to the IVS, which indicates requesting the in-vehicle system to obtain an MSD message. At this time, the sending state is entered to send the MSD to the PSAP.

A second case: obtaining normal call release or abnormal call interruption or timeout of the second preset duration, and entering the waiting for callback state.

When a call normally releases, that is, a call on an IVS side is normally hung up, or a call is abnormally interrupted, or T2 times out, the waiting for callback state is entered to wait for the PSAP to initiate an active call.

In some embodiments, after entering the waiting for acknowledgement state, other different states can be transitioned to according to different obtained information, at least including the following two cases.

A first case: determining that an acknowledging correct receipt message from the public safety answering point based on the minimum set of data is received and the acknowledging correct receipt message carries a clear instruction, or, determining that the second preset duration has timed out, and entering the waiting for callback state; the clear instruction indicating entering the waiting for callback state.

The acknowledging correct receipt message means that the PSAP sends an ALACK message to the IVS. If the ALACK message carries a clear instruction (CLEARDOWN, also referred to as a clear flag), the IVS clears call, or upon T2 timeout, the waiting for callback state is entered to wait for the PSAP to initiate an active call.

A second case: determining that an acknowledging correct receipt message from the public safety answering point based on the minimum set of data is received and the acknowledging correct receipt message carries a first identifier, or, determining that a sixth preset duration has timed out, and entering the in-call state; the first identifier indicating entering the in-call state; the sixth preset duration timeout representing transmission failure of the minimum set of data.

The first identifier can be a POSITIVE flag. If the ALACK message carries POSITIVE, or T6 times out, the in-call state is entered to perform voice call processing or wait for an MSD retransmission request. Here, timeout of the T6 timer indicates that MSD transmission has failed.

In some embodiments, the method of the present disclosure further includes: if the in-vehicle system actively hangs up a call, controlling a state of the in-vehicle system to be transitioned to the call deactivation state.

In a test scenario, or when a call ends normally during use, after the IVS side actively hangs up the call, the call deactivation state is entered to wait to initiate a call again, to perform a call connection with the PSAP.

In some embodiments, based on an eCall technical specification, through the method, clear and definite control and processing can be performed on an overall state of the eCall, including switching of the IVS in various states, enabling an eCall system to quickly and efficiently complete related services, and improve robustness, thereby ensuring that emergency rescue can be timely responded to and processed.

Some embodiments of the present disclosure further provide an apparatus for controlling an emergency call state, implementation of the apparatus can refer to description of the method embodiments and will not be repeated. As shown in FIG. 4, the apparatus includes:
a first determining module 401 configured to determine that an in-vehicle system enters a power-on initialization state after the in-vehicle system is started, the power-on initialization state being configured for initialization of the in-vehicle system;
a second determining module 402 configured to determine that the in-vehicle system enters a call deactivation state after the initialization of the in-vehicle system is completed, the call deactivation state being configured for processing an emergency call origination message; and
a control module 403 configured to control the in-vehicle system to enter a call origination state based on the emergency call origination message sent by the in-vehicle system, in which the in-vehicle system establishes a call connection with a public safety answering point in the call origination state.

The apparatus can perform clear and explicit control and processing of the state of the in-vehicle system, so that an in-vehicle emergency call system can quickly and efficiently complete related services and improve robustness, thereby ensuring that emergency rescue can be timely responded to and processed.

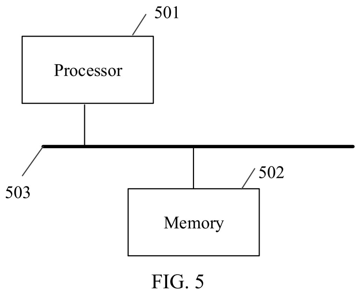

In some embodiments of the present disclosure, an electronic device is further provided as shown in FIG. 5. The electronic device includes: a processor 501, a memory 502, and a communication bus 503, in which the processor 501 and the memory 502 complete communication with each other through the communication bus 503. Here, the memory 502 stores a program executable by the processor 501, and the processor 501 executes the program stored in the memory 502 and implements the following steps:
determining that an in-vehicle system enters a power-on initialization state after the in-vehicle system is started, the power-on initialization state being configured for initialization of the in-vehicle system;
determining that the in-vehicle system enters a call deactivation state after the initialization of the in-vehicle system is completed, the call deactivation state being configured for processing an emergency call origination message; and
controlling the in-vehicle system to enter a call origination state based on the emergency call origination message sent by the in-vehicle system, in which the in-vehicle system establishes a call connection with a public safety answering point in the call origination state.

The communication bus 503 mentioned in the electronic device can be a Peripheral Component Interconnect (PCI) bus, an Extended Industry Standard Architecture (EISA) bus, or the like. The communication bus 503 can be classified into an address bus, a data bus, a control bus, and the like. For ease of representation, the bus is only represented by a thick line in FIG. 5, but this does not indicate that there is only one bus or only one type of bus.

The memory 502 may include a random access memory (abbreviated as RAM) or a non-volatile memory, such as at least one disk memory. In some embodiments, the memory may also be at least one storage device located away from the processor 501.

The processor 501 may be a general processor, including a central processing unit (CPU), a network processor (NP), or the like, and may be a digital signal processor (DSP), an application specific integrated circuit (ASIC), a field programmable gate array (FPGA) or other programmable logic devices, discrete gate or transistor logic devices, and discrete hardware components.

In some embodiments of the present disclosure, a computer-readable storage medium is further provided. The computer-readable storage medium stores a computer program, and when the computer program is run on a computer, the computer executes steps of the emergency call state control method described in the above embodiments, including:
determining that an in-vehicle system enters a power-on initialization state after the in-vehicle system is started, the power-on initialization state being configured for initialization of the in-vehicle system;
determining that the in-vehicle system enters a call deactivation state after the initialization of the in-vehicle system is completed, the call deactivation state being configured for processing an emergency call origination message; and
controlling the in-vehicle system to enter a call origination state based on the emergency call origination message sent by the in-vehicle system, in which the in-vehicle system establishes a call connection with a public safety answering point in the call origination state.

The embodiments described above may be carried out in whole or in part by software, hardware, firmware, or any combination thereof. When implemented with software, the embodiments may be carried out in whole or in part in the form of a computer program product. The computer program product comprises one or more computer instructions. When the computer program instructions are loaded and executed on a computer, the processes or functions according to the embodiments of the present disclosure are produced in whole or in part. The computer may be a universal computer, a dedicated computer, a computer network, or other programmable devices. The computer instructions may be stored in the computer readable storage medium or transmitted from one computer readable storage medium to another computer readable storage medium. For example, the computer instructions may be transmitted from one website, computer, server, or data center to another website, computer, server, or data center via a wired manner (such as coaxial cable, optical fiber, or digital subscriber line (DSL)) or a wireless manner (such as infrared or microwave). The computer readable storage medium may be any available medium that can be accessed by a computer, or a data storage device such as a server or a data center, in which one or more available media are integrated. The available medium may be a magnetic medium (such as a floppy disk, a hard disk, a magnetic tape), an optical medium (for example, DVD), a semiconductor medium (for example, a solid state disk (SSD)), and the like.

It is noted that relationship terms such as "first" and "second" herein are used solely to distinguish one entity or operation from another entity or operation without necessarily requiring or implying any actual relationship or order between the entities or operations. Furthermore, the terms "comprise", "comprising", or any other variants thereof are intended to encompass a non-exclusive inclusion, such that a process, method, article, or device that comprises a series of elements does not only comprise those elements but comprises other elements not expressly listed or elements inherent to such a process, method, article, or device. Without more limitations, an element defined by a phrase "comprise a" does not exclude the presence of additional identical elements in the process, method, article, or device that comprises the elements.

The foregoing description is only Detailed Description of the present disclosure to enable one skilled in the art to understand or implement the present disclosure. Various modifications to these embodiments will be apparent to one skilled in the art, and general principles defined herein may be implemented in other embodiments without departing from the spirit or scope of the present disclosure. Therefore, the present disclosure is not limited to the embodiments shown herein, but conforms to the widest scope consistent with the principles and novel features disclosed herein.

## Claims

1. A method for controlling an emergency call state, comprising:
determining that an in-vehicle system enters a power-on initialization state after the in-vehicle system is started, the power-on initialization state being configured for initialization of the in-vehicle system;
determining that the in-vehicle system enters a call deactivation state after the initialization of the in-vehicle system is completed, the call deactivation state being configured for processing an emergency call origination message; and
controlling the in-vehicle system to enter a call origination state based on the emergency call origination message sent by the in-vehicle system, wherein the in-vehicle system establishes a call connection with a public safety answering point in the call origination state.

2. The method according to claim 1, after controlling the in-vehicle system to enter a call origination state, further comprising:
obtaining a first indication message representing call connection failure or determining call connection timeout, and entering a waiting for callback state configured for processing a callback from the public safety answering point; or
obtaining a second indication message representing call connection success or obtaining an initiation message, and entering a sending state configured for sending a minimum set of data which comprises emergency rescue information of a vehicle.

3. The method according to claim 2, after obtaining a first indication message representing call connection failure or determining call connection timeout and entering a waiting for callback state, further comprising:
obtaining redialing information, and initiating redialing according to the redialing information to enter the call origination state; or
obtaining callback information from the public safety answering point, and entering an in-call state according to the callback information; the in-call state being configured for processing a voice call between the in-vehicle system and the public safety answering point and a retransmission request for the minimum set of data; or
determining that a ninth preset duration has timed out, and entering the call deactivation state; if the ninth preset duration has not timed out, the in-vehicle system maintains a registered state at the public safety answering point and can automatically answer a call initiated by the public safety answering point.

4. The method according to claim 2, after obtaining a second indication message representing call connection success or obtaining an initiation message, and entering a sending state, further comprising:
determining that a first preset duration has timed out, and entering an in-call state configured for processing a voice call between the in-vehicle system and the public safety answering point and a retransmission request for the minimum set of data; or
determining abnormal call interruption or timeout of a second preset duration, and entering the waiting for callback state, in which the timeout of a second preset duration represents clearing call when no clear instruction is received or the received clear instruction is incorrect; or
determining that an acknowledging receipt message from the public safety answering point based on the minimum set of data is received, and entering a waiting for acknowledgement state.

5. The method according to claim 3 or 4, after entering an in-call state, further comprising:
obtaining a start message sent by the public safety answering point, and entering the sending state, in which the start message is configured for requesting the in-vehicle system to obtain the minimum set of data of the vehicle; or
obtaining normal call release or abnormal call interruption or timeout of the second preset duration, and entering the waiting for callback state.

6. The method according to claim 4 or 5, after entering a waiting for acknowledgement state, further comprising:
determining that an acknowledging correct receipt message from the public safety answering point based on the minimum set of data is received and the acknowledging correct receipt message carries the clear instruction, or determining that the second preset duration has timed out, and entering the waiting for callback state, the clear instruction indicating entering the waiting for callback state; or
determining that an acknowledging correct receipt message from the public safety answering point based on the minimum set of data is received and the acknowledging correct receipt message carries a first identifier, or determining that a sixth preset duration has timed out and entering the in-call state, in which the first identifier indicates entering the in-call state, and the sixth preset duration timeout represents transmission failure of the minimum set of data.

7. The method according to any one of claims 1 to 6, further comprising:
when the in-vehicle system actively hangs up a call, controlling a state of the in-vehicle system to be transitioned to the call deactivation state.

8. An apparatus for controlling an emergency call state, comprising:
a first determining module configured to determine that an in-vehicle system enters a power-on initialization state after the in-vehicle system is started, the power-on initialization state being configured for initialization of the in-vehicle system;
a second determining module configured to determine that the in-vehicle system enters a call deactivation state after the initialization of the in-vehicle system is completed, the call deactivation state being configured for processing an emergency call origination message; and
a control module configured to control the in-vehicle system to enter a call origination state based on the emergency call origination message sent by the in-vehicle system, in which the in-vehicle system establishes a call connection with a public safety answering point in the call origination state.

9. An electronic device comprising: a processor, a memory, and a communication bus, in which the processor and the memory complete communication with each other through the communication bus;
the memory is configured to store a computer program; and
the processor is configured to execute the program stored in the memory to implement the method for controlling an emergency call state according to any one of claims 1 to 7.

10. A computer-readable storage medium storing a computer program, in which when executed by a processor, the computer program implements the method for controlling an emergency call state according to any one of claims 1 to 7.
